Europäisches Patentamt

European Patent Office

Office européen des brevets

(19)

(11) Publication number: **0 357 811 B1**

(12) # EUROPEAN PATENT SPECIFICATION

(45) Date of publication of patent specification: **19.11.92**

(51) Int. Cl.⁵: **B61D 19/02**, E05D 15/10, B60J 5/06, B60J 7/05, B64C 1/14

(21) Application number: **88114449.7**

(22) Date of filing: **05.09.88**

(54) Method of streamlining the outer surface of a structure with sliding doors, and a sliding door with a mechanism for streamlining the outer surface of a structure.

(43) Date of publication of application:
**14.03.90 Bulletin 90/11**

(45) Publication of the grant of the patent:
**19.11.92 Bulletin 92/47**

(84) Designated Contracting States:
**DE FR GB**

(56) References cited:
**DE-A- 3 244 439**
**US-A- 3 218 679**
**US-A- 3 383 798**
**US-A- 4 438 595**

**GLASERS ANNALEN ZEITSCHRIFT FÜR EISENBAHNWESEN UND VERKEHRSTECH-NIK, vol. 110, no. 6/7, June/July 1986, pages 255-256, Georg Siemens Verlagsbuchhand-lung, Berlin, DE**

(73) Proprietor: **Kawasaki Jukogyo Kabushiki Kaisha**
**1-1 Higashikawasakicho 3-chome Chuo-ku Kobe-shi Hyogo 650-91(JP)**

(72) Inventor: **Kawanishi, Isamu**
**19-7, Nishimachi 2 chome, Sakuragaoka, Nishi-ku,**
**Kobe-shi, Hyogo 673-02(JP)**
Inventor: **Ogawara, Makoto**
**4-5 Kumochicho 2 chome, Chuo-ku Kobe-shi, Hyogo 651(JP)**

(74) Representative: **Reinhard, Skuhra, Weise**
**Friedrichstrasse 31**
**W-8000 München 40(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Field of the Invention

The present invention relates to a sliding door in a doorway of high speed transport vehicles and the like whose outer surface must be very smooth or stream-lined to decrease the air resistance on the outer surface of the structure.

Prior Art:

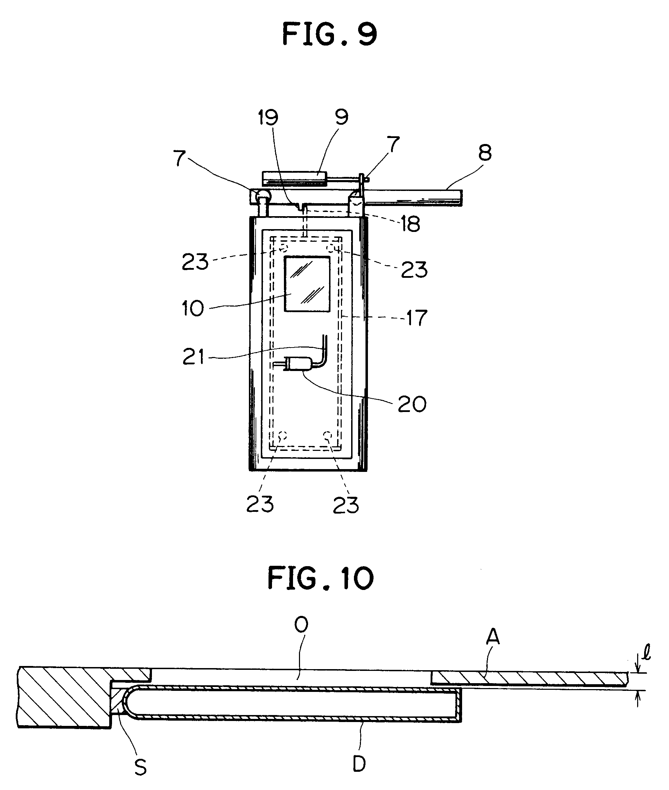

According to the conventional structure with sliding doors, as shown in Fig. 10, a sliding door D reciprocally moves along the inside of a door pocket A. When moving toward the left, the sliding door D comes into contact with a stopper S made of a buffer member to close the doorway O.

Therefore, the sliding door D which is closed inevitably develops a step of a size $\ell$ relative to the door pocket A to produce a large air resistance when the moving member runs at high speeds.

In high speed vehicles such as Shinkansen-rail way, sub-ways, mono-rail cars etc. in particular, it is an important assignment to decrease the air resistance, to decrease the running resistance and, hence to effectively use the power. This tendency becomes more important as the running speed increases.

The air resistance on the surface of the structure such as car body can be reduced very effectively by smoothing the outer surface of the structure. With the conventional sliding door structure, however, it is not possible to quite eliminate the step between the door pocket and the sliding door of the structure, and it is not allowed to minimize the air resistance by smoothing the outer surface of the structure.

There has heretofore been proposed a plug door for smoothing the outer surface of vehicle body. However, the plug door is generally moved manually and must be, as a whole, moved in two steps, i.e., in a direction in which the door is closed and in a direction at right angles therewith and, the movement is generally made on a continuous curve so that a complex structure is required for limiting the motion of the door and controlling it remotely.

Further, when the presently employed sliding door structure having a step between the door pocket and the sliding door is intended to be modified into the plug door system, it needs great modification which is virtually impossible to carry out.

The present invention was accomplished in order to solve such problems.

SUMMARY OF THE INVENTION

The present invention is concerned with a method of smoothing the outer surface of the body of transport vehicles, namely aligning the outer surface of a sliding door with the outer surface of a structure wherein, after the sliding door is closed, an outer wall member of the sliding door is protruded relative to said sliding door, said outer wall member having the size and shape substantially the same as those of the doorway, such that the outer surface of the outer wall member is in flush with the surface of the car body.

The present invention is further concerned with a sliding door with a mechanism for smoothing the outer surface of structure with the sliding door comprising a sliding door body which has an opening at a position corresponding to a doorway of the structure when said doorway is closed by the sliding door, an outer wall member which has an outer surface adapted to be of a size and shape substantially equal to those of said doorway and which is retractably fitted to the opening of said sliding door body, and an outer wall member moving device which is mounted on said sliding door body and which so works that said outer wall member is protruded until it comes in flush with the surface of the structure or that said outer wall member is retracted into the sliding door body.

The sliding door is comprised of a sliding door body, an outer wall member, and an outer wall member device which is mounted on the sliding door body such that the outer wall member is protruded or retracted relative to the sliding door body. When the sliding door is closed, the outer wall member is protruded owing to the outer wall member moving device, whereby the outer surface of the member becomes in flush with the surface of the structure and the air resistance becomes minimum when the vehicle runs.

When the sliding door is opened, the outer wall member retracts into the sliding door body owing to the outer wall member moving device. Therefore, the sliding door body and the outer wall member do not interfere with the door pocket even when the sliding door is opened and closed.

BRIEF DESCRIPTION OF THE DRAWINGS

Figs. 1 to 9 illustrate embodiments of the present invention, wherein;
Fig. 1 is a lateral section view of a sliding door when the door is opened according to a first embodiment;
Fig. 2 is a lateral section view of the sliding door when the door is closed according to the first embodiment;
Fig. 3 is a front view showing the inside of the sliding door according to the first embodiment;
Fig. 4 is a lateral section view of the sliding door when the door is opened according to a second embodiment;

Fig. 5 is a lateral section view of the sliding door when the door is closed accoridng to the second embodiment;

Fig. 6 is a front view showing the inside of the sliding door according to the second embodiment;

Fig. 7 is a lateral section view of the sliding door when the door is opened according to a third embodiment;

Fig. 8 is a lateral section view of the sliding door when the door is closed accoridng to third embodiment;

Fig. 9 is a front view showing the inside of the sliding door according to the third embodiment; and

Fig. 10 is a lateral section view of a sliding door according to a prior art.

## DESCRIPTION OF THE PREFERRED EMBODIMENTS

Embodiments of the present invention will now be described in conjunction with the drawings.

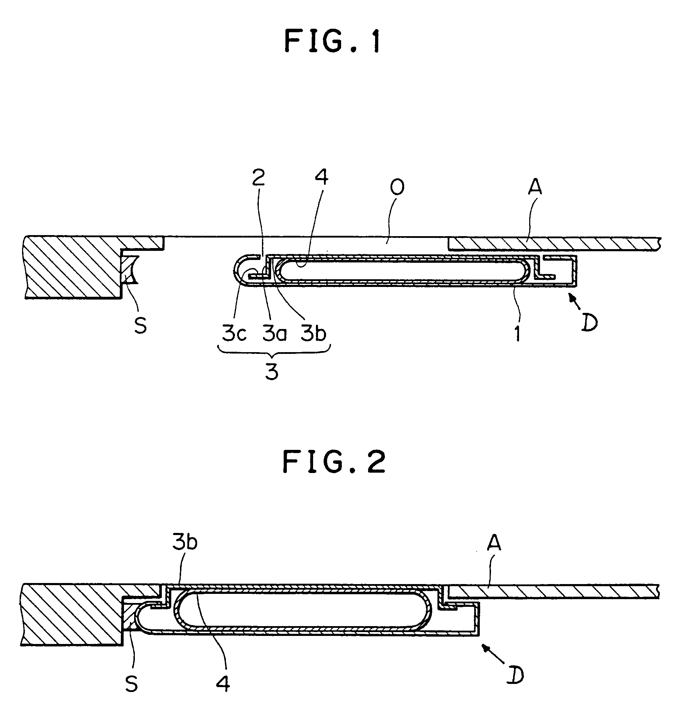

Figs. 1 to 3 are lateral section views illustrating a sliding door D and part of the structure according to a first embodiment of the present invention, wherein a sliding door body 1 moves reciprocally along the inside of a door pocket A like a conventional sliding door, and moves leftwards in Fig. 1 to come into contact with a stopper S which is composed of a buffer material to close the doorway O. This embodiment, however, is different from the conventional example with respect to that the sliding door body 1 is provided with an opening 2 of a size and shape nearly the same as those of the doorway O at a position that corresponds to the doorway O when the sliding door body 1 is closed.

In the sliding door body 1 is loosely fitted an outer wall member 3 that protrudes and retracts relative to the opening 2 and accordingly the doorway O.

The outer wall member 3 comprises a peripheral wall 3a that maintains a small gap relative to the opening 2, an outer wall 3b connected to one end of the peripheral wall 3a, and a flange 3c provided at the other side of the peripheral wall 3a.

An air bag 4 rich in resiliency is inserted between the outer wall 3b and the sliding door body 1, and both surfaces of the air bag 4 are fastened to the inner surfaces of the outer wall 3b and the sliding door body 1.

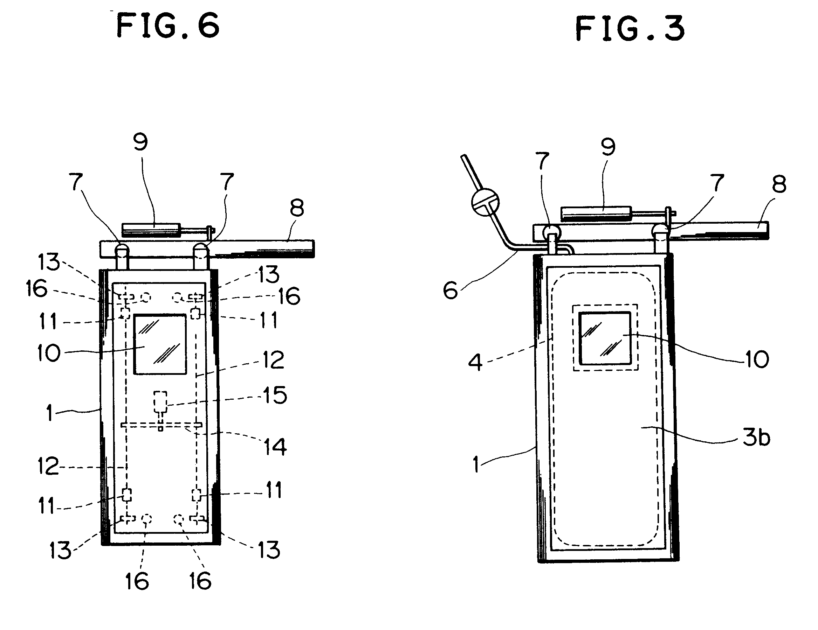

A supply/exhaust pipe 6 is installed on the upper portion of the sliding door body 1 as shown in Fig. 3, one end of the supply/exhaust pipe 6 is communicated with the air bag 4, and the other end thereof is communicated with a switching valve (not shown) so that the compressed air is supplied to the supply/exhaust pipe 6 from a source of the compressed air used for the brake and the like via the switching valve.

The outer wall member moving device comprises the air bag 4 and the supply/exhaust pipe 6.

Door rollers 7 provided at the upper end of the sliding door body 1 are supported by a rail 8 over the sliding door, and whereby the sliding door body 1 is opened and is closed by a sliding door opening/closing cylinder 9.

Reference numeral 10 denotes a glass window provided in the sliding door, and the air bag 4 may be provided with a cavity at the center thereof so that the view through the glass window 10 will not be interrupted.

Described below is a method of aligning the outer surface of the sliding door with that of the structure such as car body employing the thus constructed sliding door.

When the sliding door is being opened, the intake air is interrupted by the switching valve, and the air in the air bag 4 is communicated with the open air.

Therefore, the air bag 4 is contracted, and the outer wall member 3 is retracted into the sliding door body 1 (see Fig. 1).

Under this condition, if the cylinder 9 is operated to bring the sliding door body 1 into contact with the stopper S, then the doorway O is closed.

Next, if connections made to the source of the compressed air through the switching valve to inflate the air bag 4, the outer wall member 3 protrudes until flange 3c comes into contact with the peripheral portion of the opening 2 of the sliding door body 1 as shown in Fig. 2, and the outer wall 3b in the outer wall member 3 becomes in flush with the surface of the car body. The outer wall 3b has the size and shape nearly the same as those of the doorway O. Therefore, when the doorway O is closed by the outer wall member 3 or its outer wall 3b, the outer surface of sliding door of the vehicle is aligned with that of the car body.

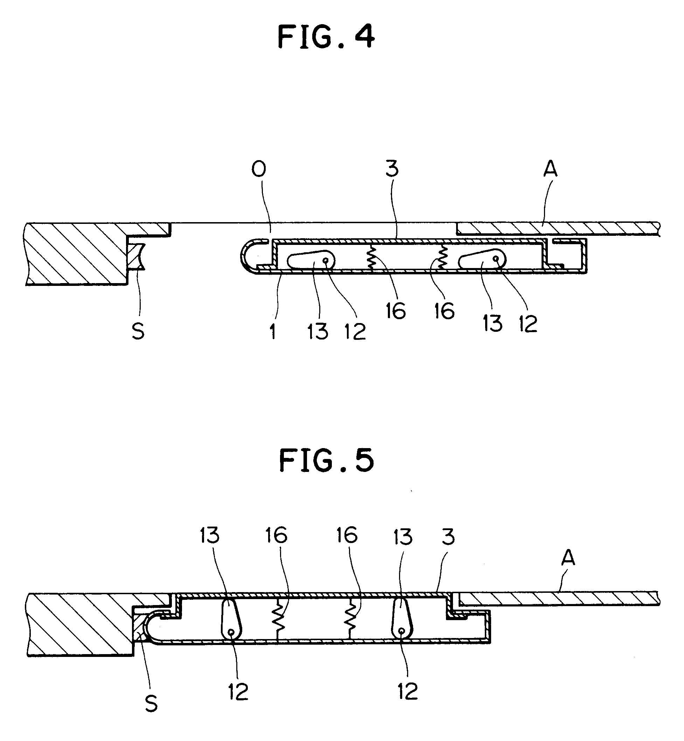

Figs. 4 to 6 illustrate a second embodiment of the present invention where the sliding door body 1 and the outer wall member 3 have the same structures as those of the first embodiment but where the outer wall member moving device is different from that of the first embodiment.

That is, cams 13 are secured at a plurality of portions onto two shafts 12 rotatably supported by bearings 11 that are secured to the sliding door body 1.

The two shafts are turned by a motor 15 via a rotation transmission mechanism 14.

Reference numeral 16 denotes springs that extend between the sliding door body 1 and the outer wall member 3, and that urge the member 3 toward the sliding door body 1.

Described below is the function of the thus constructed outer sliding door moving device according to the second embodiment.

As the motor 15 rotates by a predetermined quantity, the shafts 12 are rotated via the rotation transmission mechanism 14, whereby the cams 13 that had been lying as shown in Fig. 4 are now erected as shown in Fig. 5. Therefore, the outer wall member 3 protrudes against the springs 16 to come in flush with the surface of the structure.

To open the sliding door, the cams 13 are turned in the reverse direction; i.e., the outer wall member 3 retracts into the sliding door body 1 being pulled by the springs 16, and the sliding door can be opened without being interfered by the door pocket A.

In regard to other respects, the second embodiment is the same as the first embodiment.

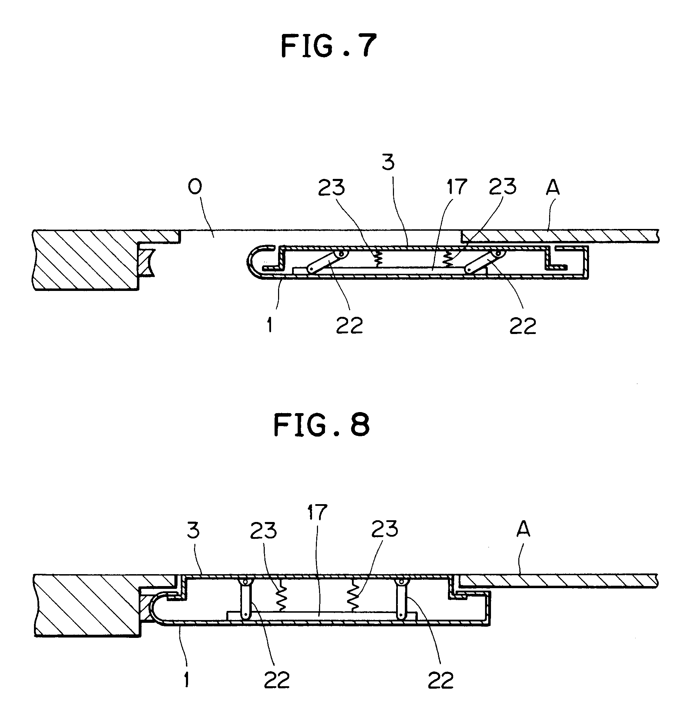

Figs. 7 to 9 illustrate the outer sliding door moving device according to a third embodiment, wherein the sliding door body 1 is provided on the inner wall thereof with a link support plate 17 in a manner that it is allowed to slide toward the right and left.

Referring to Fig. 9, a coupling metal fitting 18 that outwardly protrudes beyond the sliding door body 1 is studded on the upper portion of the link support plate 17. When the sliding door body 1 moved in the direction of being closed, the coupling metal fitting 18 comes into contact with a stopper 19 that protrudes from the lower surface of the sliding door rail 8, and the link support plate 17 slides along the inner wall surface of the sliding door body 1 being driven by a support plate moving device. Here, the support plate moving device may be so constructed that the link support plate 17 undergoes the sliding being driven directly by an air cylinder 20.

Reference numeral 21 denotes a supply/exhaust pipe which communicates the source of the compressed air with the air cylinder 20 via the switching valve.

An end of a link 22 is pivotted to the link support plate 17 and the other end of the link 22 is pivotted to the inner wall surface of the outer wall member 3.

Referring to Fig. 7, therefore, as the link support plate 17 is slide toward the left along the inner surface of the sliding door body 1, the links 22 fall and the outer wall member 3 is retracted in the sliding door body 1. As the link support plate 17 returns to the condition shown in Fig. 8, the outer wall member 3 protrudes to form a plane in flush with the surface of the structure.

Springs 23 are extended between the sliding door body 1 and the outer wall member 3 to urge the outer wall member 3 toward the retracting direction.

Described below is the function of the thus constructed outer door moving device according to the third embodiment.

When the sliding door body 1 is opened, the outer wall member 3 is retracted into the sliding door body 1 being pulled by the springs 23, and the link support plate 17 has been slid to the left along the inner wall surface of the sliding door body 1 (see Fig. 7).

As the sliding door opening/closing cylinder 9 is actuated to move the sliding door body 1 leftwards, the coupling metal fitting 18 comes into contact with the stopper 19 just before the sliding door body is closed. Therefore, the link support plate 17 moves toward the right with respect to the sliding door body 1, whereby the links 22 are erected, the outer wall member 3 protrudes against the force of the springs 23, and a plane is formed that is in flush with the surface of the structure.

The link support plate 17 may be moved rightwards being driven directly by the air cylinder 20 instead of being driven by the coupling metal fitting 18 and the stopper 19.

As described above, the outer sliding door moving device may be constructed in a variety of ways provided the outer wall member 3 is protruded to come in flush with the surface of the structure and is retracted in the sliding door body 1.

According to the present invention, the step is eliminated between the sliding door and the surface of the structure, and the outer surfaces are smoothed, by forming an opening in the sliding door of the type same as that of the traditional sliding door, by providing an outer wall member that protrudes into the opening and retracts therefrom, and by providing an outer wall member moving device for protruding or retracting the outer wall member. Therefore, the air resistance can be decreased when a vehicle runs at high speeds and the power can be efficiently utilized. Furthermore, noise such as wind noise can be suppressed. In addition, the structure exhibits improved appearance.

The sliding door body is described above in a shape of rectangular and plate-like box having a rectangular opening on the outer side face. However, the opening is not obligatorily necessary in the sliding door body. The sliding door may alternatively comprise a sliding door body having a inner plate and guide member fixed to the outer face of the sliding door body along with the line corresponding to the opening in the above first embodiment. The guide members support and guide the outer wall member protruding and retracting through the doorway of the structure.

Further the inner plate in the sliding door body is not an absolutely necessary component in the sliding door according to this invention. The sliding door body may consist of only a structure of framework, since the doorway can be closed by the outer wall member only. Of course, the inner plate is important in view of the strong structure and safe and comfortable conditions in the interior of the car.

The sliding door of the existing structures can be replaced by the sliding door of the present invention with minor modifications to easily smooth the outer surfaces of the structures. Examples of the structures to which the present invention can be applied include automobiles, ships, aircrafts, and buildings, in addition to high speed vehicles described in the embodiments.

The moving structures in high speed obtain the most favorable effect in view point of the fluid mechanism, when it is applied with the present invention. However, a static or stationary structure such as buildings receives a grace of this invention, because it is considered that skillful architects can design attractive buildings with smooth outer walls according to this invention.

**Claims**

1. A method of smoothing the outer surface of a structure with a sliding door (D), wherein, after the doorway (O) has been closed with said sliding door (D), an outer wall member of the sliding door (D) is protruded outwardly, said outer wall member (3) having an outer surface (3b) of the size and shape substantially the same as those of said doorway (O), so that the surface of the outer wall member (3) is in flush with the surface of the structure.

2. A sliding door (D) for a structure providing a smooth outer surface of the structure in its closed condition, said door comprising a sliding door body (1), which has an opening (2) at a position opposed to a doorway (O) of said sliding door (D) in the closed condition thereof, an outer wall member (3), which has an outer surface (3b) adapted to be of a size and shape substantially equal to those of said doorway (O) and which is retractably fitted to said sliding door body (1), and an outer wall member moving device (4; 12-16; 17-23), which is mounted on said sliding door body (1) and by which said outer wall member (3) is either protrudable until it comes in flush with the outer surface of the structure or retractable into the sliding door body (1).

3. A sliding door according to claim 2, wherein said outer wall member moving device comprises an air bag (4) disposed between said outer wall member (3) and said sliding door body (1).

4. A sliding door according to claim 2, wherein said outer wall member moving device comprises springs (16) urging said outer wall member (3) toward a direction to retract into the sliding door body (1) and cams (13) working to protrude said outer wall member (3) against said springs (16).

5. A sliding door according to claim 2, wherein said outer wall member moving device comprises a link support plate (17) sliding along the inner wall surface of said sliding door body (1), a link (22) one end thereof being pivotted to said link support plate (17) and the other end thereof being pivotted to the inner wall of said outer wall member (3), and a moving device (18 - 21, 23) for said link support plate (17) sliding said link support plate (17) toward the right and left, and wherein when said link support plate (17) has undergone the sliding, said link (22) is erected so that the outer wall member (3) is protruded.

6. A sliding door mechanism for smoothing the outer surface of the structure such as transportation vehicles, buildings or the like comprising a sliding door body (1) movable along the inner wall of the structure between a position in which the doorway (O) of the structure is opened and another position in which the sliding door (D) closes the doorway (O), an outer wall member (3) having the size and shape substantially the same to those of said door way (O) and complementary therewith and mounted on the sliding door body (1) to be guided to displace outwardly and inwardly through the doorway (O), a guide means (7, 8) for guiding the sliding door (D) so that when placed in a position in which the doorway (D) is completely closed by the sliding door (D), the outer wall member (3) is movable between the innermost position in which the sliding door (D) inclusive of the member (3) is slidable along with the inner wall of the structure and the outermost position in which the outer surface (3b) of the sliding door (D), namely of the outer wall member (3), is in flush with that of the structure, and means (4; 16, 23) for moving the outer wall member (3) in relation to the sliding door body (1) until the innermost position, before the sliding door (D) inclusive of the sliding door body (1) and the outer surface member (3) starts to move from the doorway closing position toward its opening position.

## Patentansprüche

1.  Verfahren zur Glättung der Außenfläche eines Aufbaus mit einer Schiebetür (D), bei dem nach dem Schließen der Türöffnung (O) mit der Schiebetür (D) ein Außenwandteil der Schiebetür (D) nach außen vorgeschoben wird, wobei der Außenwandteil (3) eine Außenfläche (3b) von einer im wesentlichen selben Größe und Form wie die der Türöffnung (O) derart aufweist, daß die Oberfläche des Außenwandteils (3) bündig mit der Oberfläche des Aufbaus abschließt.

2.  Schiebetür (D) für einen Aufbau, welche eine glatte Außenfläche des Aufbaus in ihrem geschlossenen Zustand vorsieht, bestehend aus einem Schiebetürkörper (1), der eine Öffnung (2) an einer der Türöffnung (O) der Schiebetür (D) in deren geschlossenem Zustand gegenüberliegenden Stellung aufweist, einem Außenwandteil (3), das eine Außenfläche (3b) besitzt, welche im wesentlichen die gleiche Größe und Form wie die der Türöffnung (O) besitzt und die zurückziehbar an dem Schiebetürkörper (1) befestigt ist, und aus einer Bewegungseinrichtung (4; 12-16; 17-23) für den Außenwandteil, welche an dem Schiebetürkörper (1) montiert ist, und durch die der Außenwandteil (3) entweder bis zur Bündigkeit mit der Außenfläche des Aufbaus vorschiebbar oder in den Schiebetürkörper (1) zurückziehbar ist.

3.  Schiebetür nach Anspruch 2, bei der zu der Bewegungseinrichtung zu dem Außenwandteil ein Luftsack (4) gehört, der zwischen dem Außenwandteil (3) und dem Schiebetürkörper (1) angeordnet ist.

4.  Schiebetür nach Anspruch 2, bei der die Bewegungseinrichtung für den Außenwandteil Federn (16), welche den Außenwandteil (3) zu einer Richtung zum Zurückziehen in den Schiebetürkörper (1) drücken, und Steuernokken (13) aufweist, welche den Außenwandteil (3) gegen die Federn (16) vorrücken.

5.  Schiebetür nach Anspruch 2, bei der zu der Bewegungseinrichtung für den Außenwandteil eine Gelenkhebelhalteplatte (17), die längs der Innenwandfläche des Schiebetürkörpers (1) gleitet, ein Gelenkhebel (22), dessen eines Ende an der Gelenkhebelhalteplatte (17) schwenkbar angelenkt ist und dessen anderes Ende an der Innenwand des Außenwandteils (3) angelenkt ist, und eine Bewegungseinrichtung (18 - 21, 23) für die Gelenkhebelplatte (17) gehören, welche die Gelenkhebelplatte (17) nach rechts und links gleitend verschiebt, und bei der nach dem gleitenden Verschieben der Gelenkhebelplatte (17) der Gelenkhebel (22) derart aufgestellt ist, daß der Außenwandteil (3) vorgeschoben ist.

6.  Schiebetürmechanismus zum Glätten der Außenfläche eines Aufbaus, beispielsweise eines Transportfahrzeugs, Gebäudes oder dergleichen, mit einem Schiebetürkörper (1), der längs der Innenwand des Aufbaus zwischen einer Stellung, in der die Türöffnung (O) des Aufbaus geöffnet ist, und einer anderen Stellung, in der die Schiebetür (D) die Türöffnung (O) umschließt, bewegbar ist, einem Außenwandteil (3), das im wesentlichen dieselbe Größe und Form wie die der Türöffnung (O) besitzt und komplementär zu dieser ausgebildet und an dem Schiebetürkörper (1) zur Führung zwecks Versatzes nach außen und nach innen durch die Türöffnung (O) montiert ist, einer Führungseinrichtung (7, 8) zum Führen der Schiebetür (D) derart, daß nach deren Plazierung an Ort und Stelle die Türöffnung (O) vollständig durch die Schiebetür (D) geschlossen ist, daß der Außenwandteil (3) zwischen der ersten Stellung, in der die Schiebetür (D) einschließlich des Teils (3) längs der Innenwand des Aufbaus gleitend verschiebbar ist, und der äußersten Stellung, in der die Außenfläche (3b) der Schiebetür (D), d. h. der Außenwandteil (3), bündig mit dem Aufbau abschließt, bewegbar ist, und aus einer Einrichtung (4; 16, 23) zur Bewegung des Außenwandteils (3) bezüglich des Schiebetürkörpers (1) bis zur innersten Stellung, ehe die Schiebetür (D) einschließlich des Schiebetürkörpers (1) und das Außenflächenteil (3) beginnt, sich von der Türöffnungsschließstellung in ihre Öffnungsstellung zu bewegen.

## Revendications

1.  Procédé permettant de réaliser un alignement lisse de la surface extérieure d'une structure avec une porte coulissante (D), selon lequel, après que la baie (O) a été fermée par la porte coulissante (D), on provoque un déploiement, vers l'extérieur, d'un élément de paroi extérieure de la porte coulissante (D), cet élément de paroi extérieure (3) comportant une surface extérieure (3b) dont les dimensions et le contour sont pratiquement identiques à ceux de la baie (O), de sorte que la surface de l'élément de paroi extérieure (3) est dans l'alignement de la surface de la structure.

2.  Porte coulissante (D) pour une structure, assurant un alignement lisse de la surface extérieure de la structure dans son état fermé, cette porte comprenant un corps de porte coulissante (1), qui comporte une ouverture (2), qui est située en regard de la baie (O) de la porte coulissante (D) dans l'état de fermeture de cette dernière, un élément de paroi extérieure (3), qui comporte une surface extérieure (3b) agencée de façon que ses dimensions et son contour soient pratiquement identiques à ceux de la baie (O) et qui est monté d'une manière rétractable sur le corps de porte coulissante (1), et un dispositif (4 ; 12-16 ; 17-23) de déplacement de l'élément de paroi extérieure, dispositif qui est monté sur le corps de porte coulissante (1) et au moyen duquel l'élément de paroi extérieure (3) peut soit être déployé jusqu'à être dans l'alignement de la surface extérieure de la structure, soit être rétracté dans le corps de porte coulissante (1).

3. Porte coulissante suivant la revendication 2, dans laquelle le dispositif de déplacement de l'élément de paroi extérieure comprend un sac gonflable (4) disposé entre l'élément de paroi extérieure (3) et le corps de porte coulissante (1).

4. Porte coulissante suivant la revendication 2, dans laquelle le dispositif de déplacement de l'élément de paroi extérieure comprend des ressorts (16), repoussant l'élément de paroi extérieure (3) dans une direction le faisant se rétracter dans le corps de porte coulissante (1), et des cames (13) ayant une action faisant se déployer l'élément de paroi extérieure (3) à l'encontre de l'action des ressorts (16).

5. Porte coulissante suivant la revendication 2, dans laquelle le dispositif de déplacement de l'élément de paroi extérieure comprend une plaque de support de biellette (17), coulissant le long de la surface de paroi intérieure du corps de porte coulissante (1), une biellette (22), dont une extrémité est montée pivotante sur la plaque de support de biellette (17) et dont l'autre extrémité est montée pivotante sur la face intérieure de l'élément de paroi extérieure (3), et un dispositif (18-21, 23) de déplacement de la plaque de support de biellette (17), permettant de faire coulisser la plaque de support de biellette (17) vers la droite et vers la gauche, et dans laquelle, lorsque la plaque de support de biellette (17) a exécuté un coulissement, la biellette (22) est dressée de façon que l'élément de paroi extérieure (3) soit déployé.

6. Mécanisme de porte coulissante, permettant d'assurer un alignement lisse de la surface extérieure d'une structure telle qu'un véhicule de transport, un bâtiment ou une structure analogue, comprenant un corps de porte coulissante (1), mobile le long de la paroi intérieure de la structure entre une position dans laquelle la baie (O) de la structure est ouverte et une autre position dans laquelle la porte coulissante (D) obture la baie (O), un élément de paroi extérieure (3), dont les dimensions et le contour sont pratiquement identiques à ceux de la baie (O) et sont complémentaires de ces derniers et qui est monté sur le corps de porte coulissante (1) de façon à être guidé pour se déplacer vers l'extérieur et vers l'intérieur dans la baie (O), des moyens de guidage (7, 8), permettant de guider la porte coulissante (D) de façon que, lorsqu'ils sont placés dans une position dans laquelle la baie (O) est complètement obturée par la porte coulissante (D), l'élément de paroi extérieure (3) soit mobile entre la position la plus intérieure, dans laquelle la porte coulissante (D), y compris l'élément (3), peut coulisser le long de la paroi intérieure de la structure, et sa position la plus extérieure dans laquelle la surface extérieure (3b) de la porte coulissante (D), plus précisément de l'élément de paroi extérieure (3), est dans l'alignement de la surface extérieure de la structure, et des moyens (4; 16, 23) permettant de déplacer l'élément de paroi extérieure (3) vis-à-vis du corps de porte coulissante (1) jusqu'à sa position la plus intérieure, avant que la porte coulissante (D), y compris le corps de porte coulissante (1) et l'élément de surface extérieure (3), ne commence à se déplacer de la position obturant la baie vers sa position d'ouverture.

# FIG. 1

# FIG. 2

FIG.3

FIG.6

# FIG. 4

# FIG. 5

FIG.7

FIG.8

# FIG. 9

# FIG. 10